Europäisches Patentamt

European Patent Office

Office européen des brevets

(11) Publication number: **0 354 272**
A1

## EUROPEAN PATENT APPLICATION

(21) Application number: 88201698.3

(51) Int. Cl.⁴: **F16L 19/02**

(22) Date of filing: 08.08.88

(43) Date of publication of application:
14.02.90 Bulletin 90/07

(84) Designated Contracting States:
BE CH DE GB IT LI SE

(71) Applicant: **EUROPEAN SUPPLIES & SERVICES B.V.**
**Edisonstraat 13h**
**NL-2723 RS Zoetermeer(NL)**

(72) Inventor: **van de Graaff, Marco**
**Kievitlaan 3**
**NL-2261 ER Leidschendam(NL)**

(74) Representative: **Smulders, Theodorus A.H.J., Ir. et al**
**Vereenigde Octrooibureaux Nieuwe Parklaan 107**
**NL-2587 BP 's-Gravenhage(NL)**

(54) **Flush packing.**

(57) A packing comprising a sealing strip of rubbery (5), resiliently deformable material adhered lengthwise to an abutting strip (6) of practically undeformable material. In unloaded condition, the sealing strip is bounded by end surfaces diverging towards a free side (9) of the sealing strip. The sealing strip has, in unloaded condition, such a cross-sectional configuration that when it is compressed between two flat surfaces so that these approach each other to a perpendicular distance equalling the height of the side of the sealing strip that is adhered to the abutting strip, the sealing strip is bounded at the free side by a straight line. In one preferred embodiment the cross-sectional configuration of the sealing strip has a convex free side (4) and a side adhered to the abutting strip having a height about twice the largest perpendicular distance between the free side and the abutting strip. In another preferred embodiment the sealing strip has a V-shaped cross-sectional configuration with two legs formed by substantially parallelogram-shaped elements, the free sides of which are turned a few degrees to the respective outer sides of the V relatively to the plane in which they should lie in the loaded condition of the sealing strip.

FIG. 1

FIG. 2

# Flush packing

This invention relates to a packing, and in particular to a packing comprising a sealing strip of rubbery, resiliently deformable material attached lengthwise to an abutting strip of practically undeformable material. A prior packing of this kind is disclosed in NL-C-73833, in which the sealing strip, in unloaded condition is bounded, by end surfaces diverging towards a free side of the sealing strip. A packing of this kind is mounted between parts to be sealed. In mounted condition, the sealing strip is compressed to a pre-determined extent between the parts to be sealed. In the above prior Dutch patent, the packing is described in an annular form, but it may have different configurations, such as square or rectangular.

The prior packings have the disadvantage that the free surface of the sealing strip is not flush with at least one adjacent wall of the members between which a seal is to be made, as a result of which an edge or cavity is formed, in which dirt may collect, and which renders cleaning difficult. This is a major drawback, for example, in plants for the food industry. For connections between pipe lines, such an irregularity in a passage has the additional disadvantage that it may cause turbulences in fluid streams, thereby, for example, increasing the flow resistance.

It is an object of the present invention to overcome the above drawbacks by providing a packing which is flush with at least one wall of the adjacent parts.

For this purpose the present invention provides, in a packing comprising a sealing strip of rubbery, resiliently deformable material attached lengthwise to an abutting strip of practically undeformable material, the sealing strip in unloaded condition being bounded by end surfaces diverging towards a free side of said sealing strip, the improvement which comprises that, in unloaded condition, the sealing strip has such a cross-sectional configuration that when it is compressed between two flat surfaces so that these approach each other to a perpendicular distance equalling the height of the side of the sealing strip that is adhered to the abutting strip, the sealing strip is bounded at the free side by a straight line.

The requirement that, in the loaded condition, the rubbery material must be a flush continuation of at least one wall of a passage in the adjacent parts can only be satisfied if the cross-sectional configuration of the sealing strip has a specific form corresponding with the cross-sectional configuration of the slit to be sealed. In accordance with the present invention, some preferred embodiments have been developed by experimentation.

One embodiment is characterized in that the cross-sectional configuration of the sealing strip, in unloaded condition, has a convex free side and a side adhered to the abutting strip having a height about twice the largest perpendicular distance between the free side and the abutting strip. Another embodiment, which is particularly suitable for low pressures and compressive forces between the adjacent members is characterized in that the sealing strip has a V-shaped cross-sectional configuration having two legs formed by substantially parallelogram-shaped elements, the free sides of which are turned a few degrees to the respective outer sides of the V relatively to the plane in which they should lie in the loaded condition of the sealing strip.

A further elaboration of the invention, which is particularly suitable for use as a sealing ring in detachable couplings for connecting pipes in accordance with the standard ISO 2853-1976 (E), annex B, is characterized in that the height of the sealing strip where it is adhered to the abutting strip is 3.4 mm and that the radius of the convex side is 11.9 mm.

Conventional gaskets for these couplings comprise. a thin-walled support ring only, which is unsuitable for taking up the compressive force with which the coupling members are forced together. They may readily be damaged when the coupling is tightened. In the packing according to the present invention, this is not the case, because the coupling members can only be tightened until they abut against the abutting ring of practically undeformable material.

In view of the object of the invention, it is of great importance that the sealing strip and hence, necessarily, the abutting strip as well, is accurately positioned in the transverse direction relatively to the walls of the components between which a seal is made. For this purpose the components may be provided with recesses corresponding to the shape of the packing. For a good positioning in the transverse direction it is a further feature of the invention that the abutting strip has a molding designed to cooperate with a molding of adjacent parts.

Generally speaking, the positioning in transverse direction should be effective both inwardly and outwardly. If, however, the packings are of limited length and are of the endless kind, such as packing rings, positioning by a stop in either the inward or the outward direction may be sufficient. This is achieved, in accordance with a preferred embodiment of the invention, in which the molding of the abutting strip comprises at least one flange.

A further elaboration of the embodiment last mentioned is particularly suitable for use in the couplings according to the above ISO standard and is characterized in that the abutting strip with the flanges forms a T-section, to the end of the leg of which the sealing strip is adhered. In this embodiment the leg of the T functions as an abutting surface. In the known packing rings with a support ring in accordance with the above ISO standard, the support ring does not provide an exact axial positioning, as it fits the recess with clearance both relative to the nut of the coupling and relative to the coupling members.

The effect of the packing according to this invention is that "cleaning in place" (CIP) is possible and that disassembly is required less often.

For use in the food industry, the sealing strip of the packing according to the invention is preferably made of a nitrile-K rubber.

Some embodiments of the invention will now be described in more detail, by way of example, with reference to the accompanying diagrammatic drawings. In said drawings,

Fig. 1 is a cross-sectional view of a packing according to the present invention in the mounted, loaded condition;

Figs. 2 and 3 are views similar to Fig. 1, showing packings according to the present invention in the unloaded state;

Fig. 4 is a view similar to Fig. 1, and showing a different embodiment of the invention in the mounted and loaded condition;

Figs. 5 and 6 are cross-sectional views of a packing in accordance with the present invention in the mounted and loaded condition; and

Fig. 7 is a cross-sectional view of an unloaded packing as illustrated in Fig. 6.

In the drawings, corresponding parts are designated by the same reference numerals.

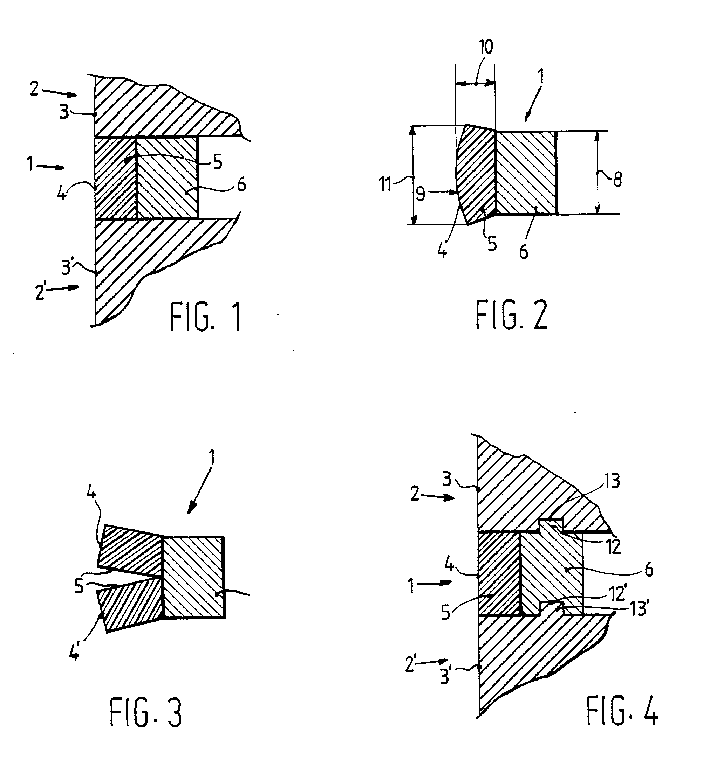

Fig. 1 shows a packing 1 according to the present invention, comprising a sealing strip 5 and an abutting strip 6, clamped between members 2 and 2'. Members 2 and 2' are kept in spaced relationship to each other by the abutting strip 6, while the surface 4 bounding the side of sealing strip 5 away from the abutting strip is flush with the surfaces 3 and 3' of members 2 and 2', so that there are no edges or cavities in which dirt can collect and, if the surfaces 3 and 3' form part of the inner walls of a pipe, the packing in the pipe does not cause any additional flow resistance.

Fig. 2 shows a packing 1 according to the invention in the unloaded state. The embodiment shown, with a height 8, a width 10 half as large, and a radius 9 of about 3.5 times the height and a largest height 11 of the sealing strip of 1.3 times the height 8, with the depth 10 being selected so that the volume of the sealing strip is equal to that of the space to be occupied in the loaded condition, has been found to be very satisfactory for a distance between wall 3 and the outer edge of the sealing ring 5 of about 0.5 time the height 8.

Another embodiment, which is suitable for lower pressures and compressive forces, is shown in Fig. 3. As shown, the sealing strip 5 has a V-shaped cross-sectional configuration having two legs formed by substantially parallelogram-shaped elements having free surfaces 4, 4'. When the parts 5 are pressed together, the V is closed and the surfaces 4 and 4' form one surface 4 (as in Fig. 1). For this purpose the free surfaces 4 and 4' are turned a few degrees to the respective outer sides of the V relatively to the plane in which they should lie in the loaded condition of the sealing strip.

To obtain a flush continuation, it is of major importance that the packing should be exactly positioned in the transverse direction.

Fig. 4 shows an embodiment of the invention in which this is achieved by providing the abutting strip 6 with a molding 12, 12', which cooperates with a molding 13, 13' of the adjacent parts 2, 2'. Such cooperating moldings 12, 12' and 13, 13' on opposite sides of the abutting strip 6 offer the additional advantage that the adjacent parts 2 and 2' are also exactly positioned relatively to each other. This ensures an accurately flush connection of the surface 4, bounding the side of the sealing strip 5 remote from the abutting strip 6, to the walls 3 and 3' of the adjacent parts 2 and 2'.

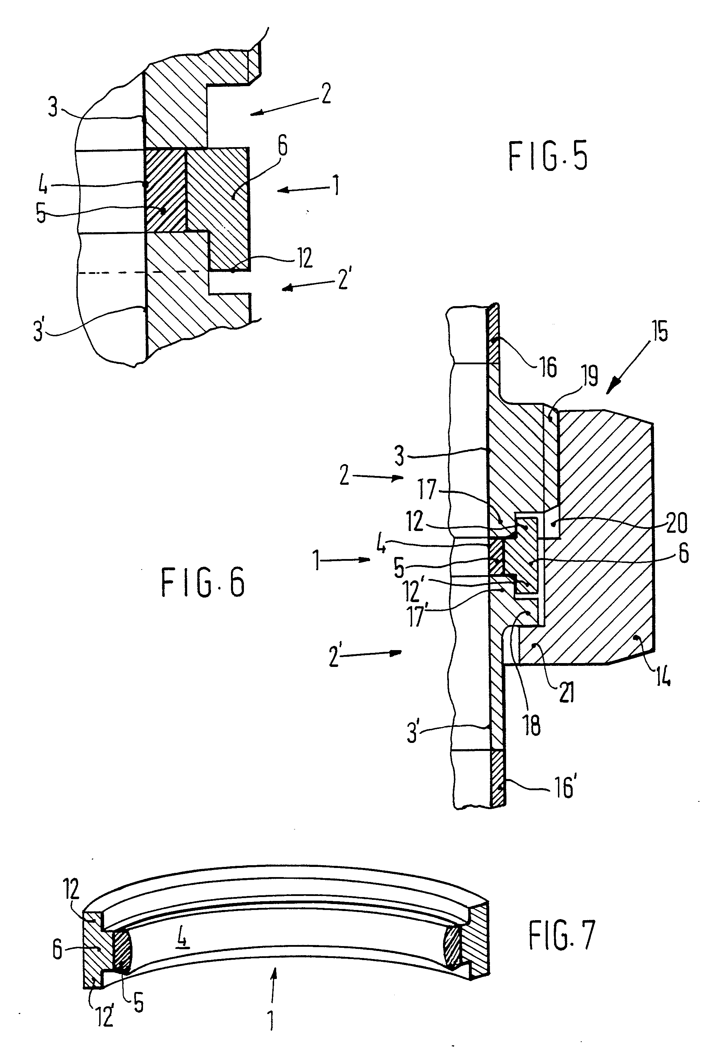

Fig. 5 shows an annular embodiment of a packing according to the invention, in which the molding 12 for positioning in the transverse direction takes the form of a flange. It should be noted that the flange, in cooperation with one of the adjacent members 2, 2', only prevents the packing 1 from shifting in the direction of walls 3, 3', while shifting in the opposite direction is not prevented. In the case of an annular form, however, this is not a drawback, because shifting of the packing in a direction away from walls 3, 3' is always prevented by a flange portion of a circle segment located on the opposite side of the ring.

Figs. 6 and 7 show an annular embodiment suitable for use in a coupling according to the above ISO standard, the ring being shown mounted in such a coupling in Fig. 6. Fig. 6 shows a detachable coupling 15 joining two ends of pipes 16 and 16'. Welded to the pipes are two coupling members 2 and 2'. One coupling member 2 is provided with screw thread 19 and the other 2' is provided with an outwardly projecting flange 18. A nut 14 has a screw thread corresponding to the screw thread 19 of coupling member 2 and an inwardly projecting flange 21 corresponding to the flange 18 of the other coupling member 2. The nut 14 is arranged to tighten the two coupling members together with a packing in accordance with the invention between them. The abutting ring 6 of the packing is abutted by flanges 17 and 17' of the two coupling members 2 and 2'. The abutting ring further has flanges 12 and 12' surrounding the axially projecting flanges 17 and 17' on the outside with a narrow fit. The sealing ring 5 adhered to the inside of the abutting ring forms, with its free side 4, when the nut has been tightened until the coupling members 2 and 2' abut against the abutting ring 6, a straight, flush continuation of the walls 3, 3' of the coupling members 2, 2'. The two flanges 12, 12', which cooperate with members 2 and 2' not only ensure axial positioning of the packing 1, but members 2 and 2' are accurately positioned axially relatively to each other. The positioning obtained in this way is much more accurate than that obtained solely by a nut 14, with which members 2 and 2' are pressed together, as is the case in the application of prior packings in accordance with the above ISO standard.

## Claims

1. In a packing comprising a sealing strip of rubbery, resiliently deformable material adhered lengthwise to an abutting strip of practically undeformable material, the sealing strip, in unloaded condition, being bounded by end surfaces diverging towards a free side of said sealing strip, the improvement which comprises that, in unloaded condition, the sealing strip (5) has such a cross-sectional configuration that when it is compressed between two flat surfaces so that these approach each other to a perpendicular distance equalling the height (8) of the side of the sealing strip (5) that is adhered to the abutting strip (6), the sealing strip (5) is bounded at the free side by a straight line.

2. A packing as claimed in claim 1, wherein the cross-sectional configuration of the sealing strip (5), in unloaded condition, has a convex free side (4) and a side adhered to the abutting strip (6) having a height about twice the largest perpendicular distance between the free side (4) and the abutting strip (6).

3. A packing as claimed in claim 1, wherein the sealing strip (5) has a V-shaped cross-sectional configuration having two legs formed by substantially parallelogram-shaped elements, the free sides (4, 4') of which are turned a few degrees to the respective outer sides of the V relatively to the plane in which they should lie in the loaded condition of the sealing strip.

4. A packing as claimed in claim 2, wherein the height (8) of the sealing strip (5) where it is adhered to the abutting strip (6) is 3.4 mm and the radius (9) of the convex side (4) is 11.9 mm.

5. A packing as claimed in claim 1, wherein the abutting strip (6) has a molding (12, 12') designed to cooperate with a molding (13, 13') of adjacent parts (2, 2').

6. A packing as claimed in claim 1, in which the strips are concentric rings and the molding (12) of the abutting strip (6) comprises at least one flange (12).

7. A packing as claimed in claim 6, wherein the abutting strip with the flanges (12, 12') forms a T-section, to the end of the leg of which the sealing strip is adhered.

8. A packing as claimed in claim 1, wherein the sealing strip (5) is made of a nitrile-K rubber.

9. A detachable coupling (15) for joining two ends of pipes (16 and 16'), fittings or like appliances, comprising two coupling members (2 and 2') connected to such pipes by welding or shrinking, one coupling member (2) being provided with screw thread (19) and the other coupling member (2') being provided with an outwardly projecting flange (18), a nut (14) having screw thread corresponding to the screw thread (19) of said one coupling member (2) and an inwardly projecting flange (21) corresponding to the flange (18) of the other coupling member (2'), said nut (14) being arranged to tighten said two coupling members together with a packing (1) between them as claimed in claim 1, the abutting ring (6) of which is abutted by flanges (17 and 17') of the two coupling members (2 and 2'), which flanges (17 and 17') project axially towards each other, the abutting ring further having flanges (12 and 12') surrounding the axially projecting flanges (17 and 17') on the outside with a narrow fit, the sealing ring (5) adhered to the inside of the abutting ring forming with its free side (4), when the nut has been tightened until the coupling members (2 and 2') abut against said abutting ring (6), a straight, flush continuation of the walls (3, 3') of the coupling members (2, 2').

FIG. 1

FIG. 2

FIG. 3

FIG. 4

FIG·5

FIG·6

FIG·7

# EUROPEAN SEARCH REPORT

European Patent Office

Application Number

EP 88 20 1698

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| A | FR-A-1 113 579  (A.P.V.) <br> * figures 1-4 * <br> --- | 1,2,5-7 ,9 | F 16 L  19/02 |
| A | GB-A-1 035 958  (A.P.V.) <br> * claim 1, figures 1,3 * <br> --- | 1,6,9 | |
| A | DE-C- 891 646  (VEREINIGTER ROHRLEITUNGSBAU) <br> * figures A,C * <br> --- | 3 | |
| D,A | NL-C-  73 833  (DOWTY EQUIPMENT) <br> ----- | | |
| | | | **TECHNICAL FIELDS SEARCHED (Int. Cl.3)** |
| | | | F 16 L  19/00 <br> F 16 L  23/00 |

The present search report has been drawn up for all claims

| Place of search | Date of completion of the search | Examiner |
|---|---|---|
| BERLIN | 09-03-1989 | SCHLABBACH M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P0401)